# EUROPEAN PATENT APPLICATION

(11) **EP 1 338 989 A1**
(43) Date of publication of application: **27.08.2003**
(21) Application number: 01980919.3
(22) Date of filing: 26.10.2001
(51) Int. Cl.: G06F 17/60, G06F 9/06, G06F 1/00, A63F 13/12

(54) **DIGITAL CONTENT SELLING METHOD AND SYSTEM USING COMMUNICATION NETWORK**

(30) Priority: 26.10.2000 JP 2000327722
(71) Applicant: Interlex Inc., Tokyo 108-0023 (JP)
(72) Inventor: SATO, Kenji, Shinagawa-ku, Tokyo 141-0021 (JP)
(74) Representative: Hoffmann, Eckart, Dipl.-Ing.
(86) International application number: JP0109426
(87) International publication number: WO02035414

(57) **Abstract**

On CD-ROM 7 which is provided there are stored sets of partial content 9A, 9B, 9C, these respectively being portions of several sets of game content, and game purchase programs 15A, 15B, 15C for purchase of some desired sets of game content. A user loads such CD-ROM 7 and a user key 2 at a user system 1, and uses such user system 1 to launch a game purchase program associated with some desired game on that CD-ROM 7 and access a game distribution server 3. Upon receipt of a request to purchase some desired remaining game content, such game distribution server 3 downloads to the user system a content package 25, 27A, or 27B containing the requested remaining game content. At such a time, user system identification information at such user system 1 is written to such user key 2.

## Description

### FIELD OF ART

The present invention pertains to a method and a system for selling computer-usable digital content to a user by way of a communications network.

### BACKGROUND OF ART

While the present invention may be applied in general to any of the many different types of digital content capable of being handled by computer, the description that follows will be carried out in terms of the example of a program for playing a game at a display screen and the image and music data and the like which are incidental to same (hereinafter collectively referred to as "game content").

Game content, particularly large-size game content, is typically produced by a manufacturer which records same on a cartridge containing semiconductor memory, CD-ROM, DVD-ROM, or other such large-capacity recording medium. Game content produced in such fashion makes its way through one or more distribution channels and comes to be stocked at various shops from which it is sold.

### DISCLOSURE OF INVENTION

In accordance with conventional sales methods, while a manufacturer may manufacture game content with projected sales figures in mind, it frequently happens that game content goes unsold and is returned to the manufacturer by the shop notwithstanding such projected sales figures. For this reason, there is occurrence of such problems as the expense of management costs for management of returned game content at a warehouse or the like, lowering of selling price in order to sell off such returned game content, and so forth.

Furthermore, in accordance with conventional sales methods, because there is a limit to the total number of inventoried items that can be successfully managed by shops, what typically happens is that shops will primarily stock game content from a manufacturer with good name recognition or game content that is much talked about in the industry, and will stock little in the way of game content from a new manufacturer or a manufacturer which otherwise has poor name recognition, absent some great appeal or interest therein. Furthermore, the number of customers who frequent a particular shop will vary depending on the geographic suitability or unsuitability of that shop (e.g., accessibility or nonaccessibility via various modes of transportation, existence or nonexistence of parking, etc.). That is, even though the value of the game content may itself be high, inequities can arise which tend to deprive certain consumers of the opportunity to purchase same. And there is a possibility that this may in turn lead to diminished creative desire on the part of the producers of such games.

Furthermore, in accordance with conventional sales methods, a consumer must go to a shop during the business hours of that shop in order to purchase game content. This makes it impossible for the consumer to purchase game content at his or her convenience, at any time that he or she likes. While the method of keeping a shop open for 24 hours of the day may be cited as a possible solution hereto, shops which are open for 24 hours of the day are beset with the problems of increased labor cost and increased electricity and fuel and other such maintenance costs.

Furthermore, in accordance with conventional sales methods, the selling price of game content is typically set taking into account respective margins for the distributor and the shop and anticipating returns of game content product and the like, making the price higher than necessary. As a result, it is difficult for the consumer to purchase much game content, and the manufacturer is likewise disappointed to find that the game content which was produced through expenditure of much time and labor on the part of many people does not enjoy a wider playing audience among consumers.

The following represents a method of selling game content which has been considered for elimination of such reluctant buying on the part of the consumer.

That is, game content may be sold at low price, with the game content purchased at such low price allowing play of only a portion of the complete game, i.e., allowing only trial play. And in the event that after trial play is finished a user wants to play the remainder of the game, the user may use the game playing equipment which the user currently uses to access a prescribed server, with any necessary accounting in connection with the transaction for allowing play of the remainder of the game being carried out at the server. Following conclusion of such operations, such server may send the game playing equipment a cryptographic key for allowing play of the continuation of the game, with the cryptographic key being used at the game playing equipment to allow play of the continuation of the game.

However, in accordance with such a sales method, the manufacturer makes the assumption to greater or lesser degree that trial play will result in purchase, and even though the game content may be low in price, because manufacture thereof involves recording of the complete data and the complete program or programs which make up the game content onto media, the manufacturer must bear the sizable risk that consumers will be reluctant to make a purchase despite trial play and that it will not be possible to recover manufacturing costs. Particularly for large-size game content such as must for example be sold in the form of multiple CD-ROMs, the risk involved is greater still.

Furthermore, in accordance with such sales methods, even where play of the continuation of the game is not made possible without a cryptographic key, because the game content which is sold contains the complete data and the complete program or programs associated with the game content there is a possibility that fraudulent means will be employed to access such data and program or programs, allowing continued play of the game following trial play. There is therefore a possibility of decreased sales of game content and of diminished productive desire on the part of producers of such games.

As described above, conventional game content sales methods are beset with a great number of issues which are unsatisfactory from the standpoints of the producers, sellers, and consumers thereof. Furthermore, looking at the foregoing from another perspective, it might also be said that the methods of controlling execution of game content are beset with unsatisfactory issues.

It is therefore an object of the present invention to permit sale and execution of digital content in a way that is satisfactory to digital content producers, sellers, and consumers alike.

In order to achieve the foregoing object, a method of selling digital content in accordance with a first aspect of the present invention has an initial providing step wherein an initial content, the initial content being a portion of a complete digital content, is provided to a user system, a purchase request receiving step wherein a server system receives a content purchase request from the user system by way of a communications network, and a supplementary providing step. The supplementary providing step is a step wherein responsive to the content purchase request the server system provides to the user system by way of the communications network a remaining content, the remaining content being what remains after removal of the initial content from the complete digital content, so as to permit the complete digital content to be reconstructed at the user system from the partial content and the remaining content.

In a preferred embodiment, there is furthermore a purchase format selection step wherein the server system receives from the user, at the time that the content purchase request is received from the user, a selection of either lump purchase or installment purchase, and the supplementary providing step which is carried out by the server system is such that if a selection of lump purchase is received then all of the remaining content is provided to the user system, but if a selection of installment purchase is received then one of a plurality of content installments formed by physical or logical division of the remaining content is provided to the user system so as to permit an executable partial content, the executable partial content being an executable physical or logical portion of the complete digital content, to be reconstructed at the user system from the initial content and the content installment.

As used here, "a plurality of content installments formed by physical division" indicates that the data size of each of the plurality of content installments is smaller than the data size of the remaining content and it is possible to form a single complete instance of the remaining content as a result of combination of the plurality of content installments. For example, where the remaining content comprises two sets of data, either one of such two sets of data may represent a content installment.

On the other hand, "a plurality of content installments formed by logical division" might for example indicate temporally divided content installments, or putting this another way, a complete (or partial) instance of the remaining content which is however authorized to be executed for a length of time that is only a fraction of some fixed execution time length (as used here, "fixed execution time length" indicates a length of execution time beyond which the fee for purchase thereof is the same as that for lump purchase). In specific terms, if the fee for purchase of more than 10 hours of the complete remaining content execution time were for example the same as that for lump purchase, then a single temporally divided content installment might for example refer to a content installment authorized for an execution time length of just 1 of those 10 hours (meaning that if two such content installments were for example purchased then 2 hours of execution of the remaining content could be enjoyed).

In a preferred embodiment, in the event of an instruction for a target content to be executed at the user system, the target content being at least one of a reconstructed content, the executable partial content, the remaining content, or the content installment, such reconstructed content being complete digital content reconstructed from the remaining content and the partial content, the digital content sales method furthermore has a step wherein legitimacy of execution of the target content is checked, and a step wherein execution of target content is controlled in correspondence to the results of the legitimacy check

As used here, "execution of target content," if the target content for example contains an executable program, may refer to the running of such executable program; or, if the target content for example contains a data file representing image, audio, or text information, may refer to the opening and output of such date file.

In a preferred embodiment, the digital content sales method furthermore has a step wherein execution system identification information assigned to a specific computer system authorized to execute target content is stored, and, in the event of an instruction for target content to be executed at the user system, furthermore has a step wherein the stored execution system identification information is compared with user system identification information assigned to the user system, and a step wherein execution of target content at the user system is controlled in correspondence to the results of the comparison.

In a preferred embodiment, the digital content sales method furthermore has a user key providing step wherein a user key is provided to a user, the user key being an external storage device having means for communicating with the user system, and a step wherein the user key stores execution system identification information assigned to a specific computer system authorized to execute target content, and, in the event of an instruction for target content to be executed at the user system, furthermore has a step wherein the user key communicates with the user system and the execution system identification information within the user key is compared with user system identification information assigned to the user system, and a step wherein execution of target content at the user system is controlled in correspondence to the results of the comparison.

In a preferred embodiment, the digital content sales method furthermore has a step wherein execution system identification information assigned to a specific computer system authorized to execute the target content is received from the computer system and stored by the server system, and, in the event of an instruction for the target content to be executed at the user system, furthermore has a step wherein the server system receives from the user system, by way of the communications network, user system identification information assigned to the user system, a step wherein the server system compares the stored execution system identification information and the user system identification information from the user system, and a step wherein execution of target content at the user system is controlled by way of the communications network in correspondence to the results of the comparison.

In a preferred embodiment, the initial content comprises at least one image, audio, or text information digital subcontent, all or part of the at least one digital subcontent having removed therefrom prescribed code necessary for normal output of the image, the audio, or the text information so as to prevent normal output of all or part of the at least one image, audio, or text information from taking place at the user system based on the initial content alone, the prescribed code removed therefrom being included instead in the remaining content.

In a preferred embodiment, the digital content sales method furthermore has a recording medium providing step wherein an initial content storage medium is provided to a user, the initial content storage medium being capable of being used at a user system and having stored thereon an initial content, and a user key providing step wherein a user key is provided to a user, the user key being an external storage device having means for communicating with a user system. An initial content recording medium also has stored thereon recording medium identification information, the recording medium identification information being unique to the initial content recording medium. In such a case, the digital content sales method furthermore has a step wherein a user key stores (1) recording medium identification information stored on an initial content recording medium and (2) execution system identification information assigned to a specific computer system authorized to execute a target content, the target content being at least one of a reconstructed content, the executable partial content, the remaining content, or the content installment, such reconstructed content being complete digital content reconstructed from remaining content and partial content, and, in the event that there is a content purchase request, furthermore has a step wherein a check is performed to determine whether recording medium identification information stored on an initial content recording medium which is currently being used at a user system is present within a user key. In such a case, the aforementioned supplementary providing step is such that remaining content which is the subject of a content purchase request is provided to a user system when as a result of the check it is determined that recording medium identification information present within a user key is identical to recording medium identification information stored on an initial content recording medium which is used at a user system and that execution system identification information within a user key is furthermore identical to user system identification information assigned to a user system. A plurality of sets of execution system identification information may be stored at at least either a server system or a user key through use, for example, of a method in accordance with a sixth alternative embodiment, described below.

In a preferred embodiment, the digital content sales method furthermore has a recording medium providing step wherein an initial content storage medium is provided to a user, the initial content storage medium being capable of being used at a user system and having stored thereon an initial content. Such initial content storage medium is capable of being used for receiving provision of remaining content and has stored thereon recording medium provision source identification information, the recording medium provision source identification information being unique to a source which provided such initial content storage medium. In such a case, the digital content sales method furthermore has a step wherein a server system tabulates recording medium provision source identification information on an initial content recording medium used at a user system when that user system receives provision of remaining content which is the subject of a content purchase request.

In a preferred embodiment, the digital content sales method furthermore has a user key providing step wherein a user key is provided to a user, the user key being an external storage device having means for communicating with a user system. Such user key is capable of being used for receiving provision of remaining content and has stored thereon user key provision source identification information, the user key provision source identification information being unique to a source which provided such user key. In such a case, the digital content sales method furthermore has a step wherein a server system tabulates user key provision source identification information within a user key used at a user system when that user system receives provision of remaining content which is the subject of a content purchase request.

A method of controlling execution of digital content in accordance with a second aspect of the present invention is such that in the event of an instruction for a user system to execute digital content there is a step wherein legitimacy of execution of the digital content is checked, and a step wherein execution of the digital content is controlled in correspondence to the results of the legitimacy check.

A system for selling digital content in accordance with a third aspect of the present invention is provided with purchase request receiving means for receiving a content purchase request by way of a communications network from a user system to which an initial content is provided, the initial content being a portion of a complete digital content, and providing means for providing, responsive to the content purchase request, a remaining content to the user system by way of the communications network, the remaining content being what remains after removal of the initial content from the complete digital content, so as to permit the complete digital content to be reconstructed at the user system from the partial content and the remaining content.

A system for controlling execution of digital content in accordance with a fourth aspect of the present invention is, in the event of an instruction for a user system to execute digital content, provided with means for checking legitimacy of execution of the digital content, and means for controlling execution of the digital content in correspondence to the results of the legitimacy check.

A storage device in accordance with a fifth aspect of the present invention is provided to a user and is capable of communicating with a (specific) computer system, the storage device being provided with means for, after provision thereof to a user, storing execution system identification information assigned to such specific computer system authorized to execute digital content, and means for, in the event of an instruction for the user system to execute the digital content, communicating with the user system, so as to permit the execution system identification information within the user key to be compared with user system identification information assigned to the user system, and so as to permit execution of the digital content at the user system to be controlled in correspondence to the results of the comparison.

### BRIEF DESCRIPTION OF DRAWINGS

FIG. 1 is a block diagram showing the overall constitution of a content sales system associated with an embodiment of the present invention;
FIG. 2 is a block diagram showing detailed internal structure of a user key 2;
FIG. 3 is a drawing showing a remaining game content directory 23A;
FIG. 4 is a drawing showing an installment content package sales management table 41;
FIG. 5 is a flowchart showing a flow of processing in connection with purchase of game content in the context of a system associated with the present embodiment;
FIG. 6 is a flowchart showing a flow of processing in connection with purchase of game content in the context of a system associated with the present embodiment;
FIG. 7 is a flowchart showing a flow of processing in connection with execution of game content in the context of a system associated with the present embodiment; and
FIG. 8 is a flowchart showing a flow of processing in connection with execution of game content in the context of a system associated with the present embodiment.

### BEST MODE FOR CARRYING OUT INVENTION

Below, an embodiment applying the present invention to sale of game content is described with reference to the drawings.

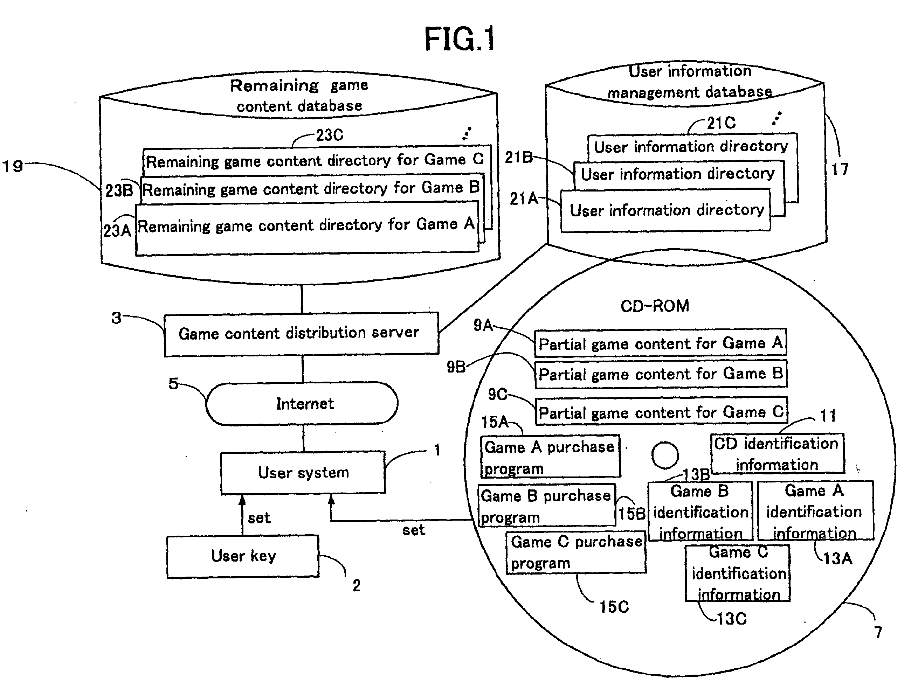

FIG. 1 shows the overall constitution of a content sales system associated with an embodiment of the present invention.

Connected to a communications network such as the Internet 5 are a computer system (hereinafter "user system") 1 such as a personal computer or the like which is used by a user, and a game content distribution server (hereinafter "game distribution server") 3 which distributes program or programs and/or data associated with game content (hereinafter referred to simply as "game content") to the user system 1. (Note that while there are actually a plurality of user systems 1, for convenience of description only one is assumed here.)

In the present system, a user may purchase and execute a desired game through the use of two types of storage device, e.g., a memory card (hereinafter "user key") 2 and a CD-ROM 7 which are provided to the user.

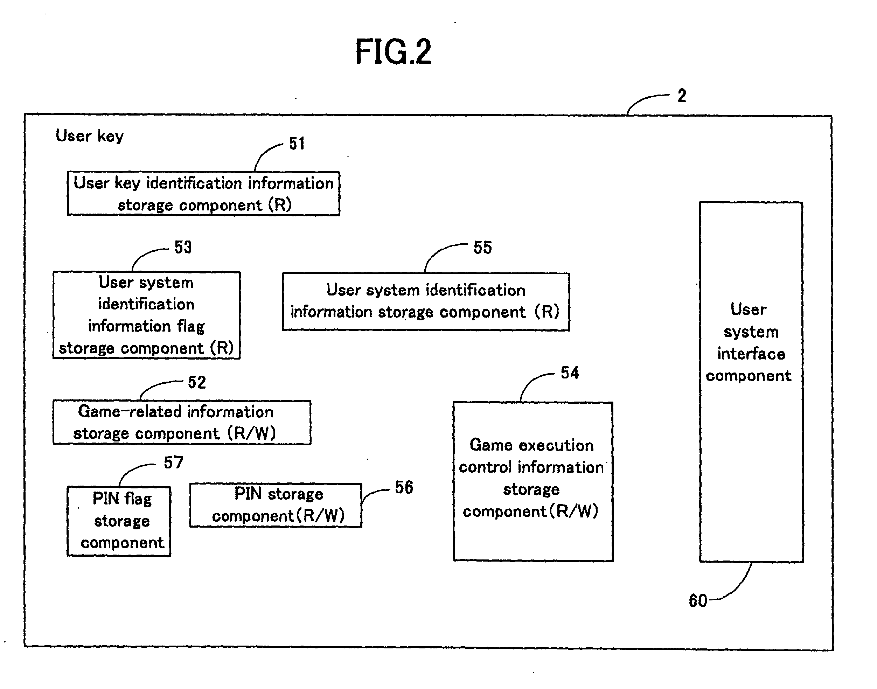

FIG. 2 is a block diagram showing detailed internal structure of a user key 2.

The user key 2 may be provided to the user by any of a variety of methods; e.g., by sending same to a user who completes a registration procedure at the game distribution server 3, by selling same at a particular retail shop, and so forth. The user key 2 may also for example be constructed such that it contains a CPU so as to carry out some prescribed control. Furthermore, the user key 2 may also be constructed in tamper-proof fashion so as to prevent alteration of or fraudulent access to information written to the interior thereof. The user key 2 is provided with a user system interface component 60, a user key identification information storage component 51, a user system identification information storage component 55, a user system identification information flag storage component (hereinafter abbreviated as "flag storage component") 53, a game-related information storage component 52, a PIN (personal identification number) storage component 56, a PIN flag storage component 57, and a game execution control information storage component 54. Included among the various types of information within the several storage components 51 through 57 is information that can be rewritten pursuant to control by the game distribution server 3 but that cannot be rewritten pursuant to request from the user. More specifically, the information within storage components 51, 53, and 55 cannot be rewritten pursuant to request from the user, but the information within the other storage components, i.e., storage components 52, 54, 56, and 57, can be rewritten pursuant to request from the user. In FIG. 2, storage components 51, 53, and 55, which store information that cannot be rewritten pursuant to request from the user, are marked "(R)", and storage components 52, 54, and 56, which store information that can be rewritten pursuant to request from the user, are marked "(R/W)".

The user system interface component 54 is for permitting two-way communication with the user system 1 (essentially with an OS (operating system) installed at the user system 1). Any of various conceivable future methods, not to mention those available at the time of filing of the present application; e.g., wired or wireless communication, mounting in or contact at a prescribed location within the user system 1, and so forth, may be used as method for communicating with the user system 1.

Information for identifying the user key (hereinafter "user key identification information"), e.g., a serial number unique to the user key, may already be stored within the user key identification information storage component 51 at the time of provision thereof to the user.

The user system identification information storage component 55 stores information for identifying the user system 1 (hereinafter sometimes referred to as "user system identification information" for convenience); e.g., a product ID of an OS installed at the user system 1 and/or some sort of hardware ID or the other (e.g., a MAC (Media Access Control) address for the user system 1 or a production lot or serial number of a CPU installed at the user system 1 or the like; hereinafter referred to as "hardware ID"). Where game content being downloaded is the first game content requested for purchase by the user, the user system identification information may be stored so as to permit cross-referencing to all or any portion of game-related information, described below.

The flag storage component 53 stores information (i.e., a "1" or a "0") indicating whether or not user system identification information is stored at the user system identification information storage component 55.

The game-related information storage component 52 stores information related to a game or games purchased by the user (hereinafter sometimes referred to as "game-related information" for convenience); e.g., CD identification information 11 associated with a CD-ROM 7 used at the time a game was purchased, game identification information associated with a purchased game, and/or information indicating format in which a game was or is to be purchased (hereinafter "game purchase format information") (where a plurality of games have been purchased, a plurality of sets of game-related information may be stored therein). Furthermore, in the present embodiment, possible formats for purchase of game content include "lump purchase" and "installment purchase." These purchase formats are described in further detail below.

The PIN storage component 56 stores a password (hereinafter "PIN") unique to the user.

The PIN flag storage component 57 stores information indicating whether or not a PIN is stored at the PIN storage component 56.

The game execution control information storage component 54 stores information for controlling whether or not to execute purchased game content (hereinafter "game execution control information"). Such game execution control information may for example include any of (1) through (5), listed below.
(1) Current date and time; i.e., an absolute time which indicates the current time and which cannot be altered by the user (such functionality may be implemented internal to the user key 2 or may be implemented as a result of computation by the user system 1 with confirmation thereof as appropriate by the user key 2). Such a current date and time information may for example be used to determine user age from a user date of birth and the current date and time as precondition for allowing execution of age-restricted game content;
(2) Date of birth of user who executes or will execute game content;
(3) Daily execution time limit for game content;
(4) Continuous execution time limit for game content; and/or
(5) Time periods during which execution of game content is not authorized.

Based on game execution control information such as the foregoing, the user system 1 can determine whether or not to execute game content, with execution of game content being carried out in correspondence to a user request only in the event that it is determined that execution thereof should occur (such functionality is described in further detail in the specification and drawings attached to patent application PCT/JP00/01538 previously filed by the present applicant). For purposes of the present embodiment, the term "execution of game content" may refer to the playing of a game itself or may refer to the running or output of a program or programs and/or data associated with such game content (e.g., activities causing display at the user system 1 of still video representable in the form of still video data, playback of music representable in the form of BGM data, or the like).

Above, user key 2 has been described. Referring again to FIG. 1, the CD-ROM 7 will next be described.

The CD-ROM 7 may contain a portion (hereinafter "partial game content") 9A, 9B, 9C of each of one or more, e.g., three, sets of game content, Game A, Game B, Game C. Furthermore, this CD-ROM 7 may also contain, in compressed and encrypted form, CD identification information (e.g., a production lot or serial number of the CD-ROM) 11 for identifying this CD-ROM 7, e.g., a serial number unique to the user key, and game identification information 13A, 13B, 13C for identifying each set of game content. The CD-ROM 7 may moreover contain a program or programs (hereinafter "game purchase program") 15A, 15B, 15C for accessing the game distribution server 3 and downloading prescribed game content.

Each set of partial game content 9A, 9B, 9C is a portion of a complete game content, this partial content being different from any trial-type content which may be provided separately from the game content proper (which is not to say that there is any objection to inclusion of trial-type content where so desired). The partial game content 9A, 9B, 9C need only be partial with respect to the collective entirety of the game content. That is, if the complete game content represented by Game A is made up, for example, of a plurality of sets of still video data, motion video data, BGM (background music) data, audio data, sound effects data, and executable program or programs for playback of such data in accordance with prescribed algorithms, the partial content 9A for Game A may comprise all of the data and executable program or programs less some portion of the executable program (i.e., the data size of the partial game content may be much larger than the data size of the remaining game content (and of course the reverse is also true)). Furthermore, the partial content 9A for Game A may also comprise originally developed scenario data or production literature data related in some way to Game A (e.g., script data used in connection with production of Game A), or the like. The partial content 9A for Game A may be constituted so as to allow such data to be viewed or heard or set as screen saver or as wallpaper for the desktop of a personal computer, or so as to allow all or part of such data to be used to play a portion of Game A (i.e., so as to allow execution of partial game content) (and the same thing is likewise true with respect to the other games, i.e., Game B and Game C). All or part of such partial game content may be stored in compressed and/or encrypted form.

Game purchase programs 15A, 15B, 15C are capable of receiving a game purchase request from a user. Upon receipt of a game purchase request from a user, a game purchase program 15A, 15B, 15C automatically accesses the game distribution server 3, logs on at same (i.e., such program possesses automatic logon functionality), and notifies the game distribution server 3 of the fact that a game purchase request has been received. At such time, such game purchase program 15A, 15B, 15C investigates to determine whether or not the user key 2 and the user system 1 are capable of mutual communication, and, if they are capable of mutual communication, retrieves specific information (user key identification information, and, if user system identification information corresponding to the game requested to be purchased is stored therein, that user identification information, or the like) from the user key 2 and sends that information to the game distribution server 3. If as a result of the processing to be described below it is determined at the game distribution server 3 that such game content is authorized for download, such game purchase program 15A, 15B, 15C downloads from the game distribution server 3 the game content for the game requested to be purchased (during download, downloaded data and/or program or programs may be successively installed at the user system 1 in accordance with a downloaded installation program, to be described below).

Furthermore, such game purchase program 15A, 15B, 15C investigates to determine whether or not game identification information for the game requested to be purchased is already contained within the user key 2. If it is as a result determined that such game identification information is not yet contained within the user key 2 (i.e., the game content requested to be purchased is the first such game content to be downloaded), the game purchase program 15A, 15B, 15C, in parallel fashion with respect to processing for download of game content, stores user system identification information (product ID of OS and hardware ID) and game-related information (CD identification information 11 stored on CD-ROM 7 and game identification information for the game requested to be purchased) within the user key 2 and uploads same to the game distribution server 3.

The game distribution server 3 is provided with a user information management database 17 and a remaining game content database 19.

The user information management database 17 is a database for managing information (hereinafter "user information") related to respective users. The user information management database 17 is provided with directories (hereinafter "user information directories") 21A, 21B, 21C, ... corresponding to each respective user who has completed user registration procedures with the game distribution server 3. Such a user information directory 21A, 21B, 21C ... stores user information for the user corresponding thereto; such user information for example including a name, street address, telephone number, sex, age, email address, user key identification information, user system identification information, game-related information, and PIN. Where a user has a plurality of user keys, such user information directory 21A, 21B, 21C ... may store a plurality of sets of user key identification information. User system identification information, game-related information, and PINs may be stored so as to permit cross-referencing to user key identification information. Furthermore, where a user is purchasing or has purchased a plurality of sets of game content, such user information directory 21A, 21B, 21C ... may store a plurality of sets of user system identification information, game-related information, and PINS (such sets of information respectively corresponding to the several games purchased or being purchased). A new such user information directory 21A, 21B, 21C ... is created each time that a new user completes the user registration procedure.

The remaining game content database 19 is provided with remaining game content directories 23A, 23B, 23C ... respectively corresponding to one or more games subject to sale. Such a remaining game content directory 23A, 23B, 23C ... stores remaining game content for the game corresponding thereto, a program for installing such remaining game content at a user system 1 downloading such remaining game content, and so forth (as used herein, "remaining game content" refers to what remains after subtraction of the partial game content which is stored on the CD-ROM 7 from the complete game content).

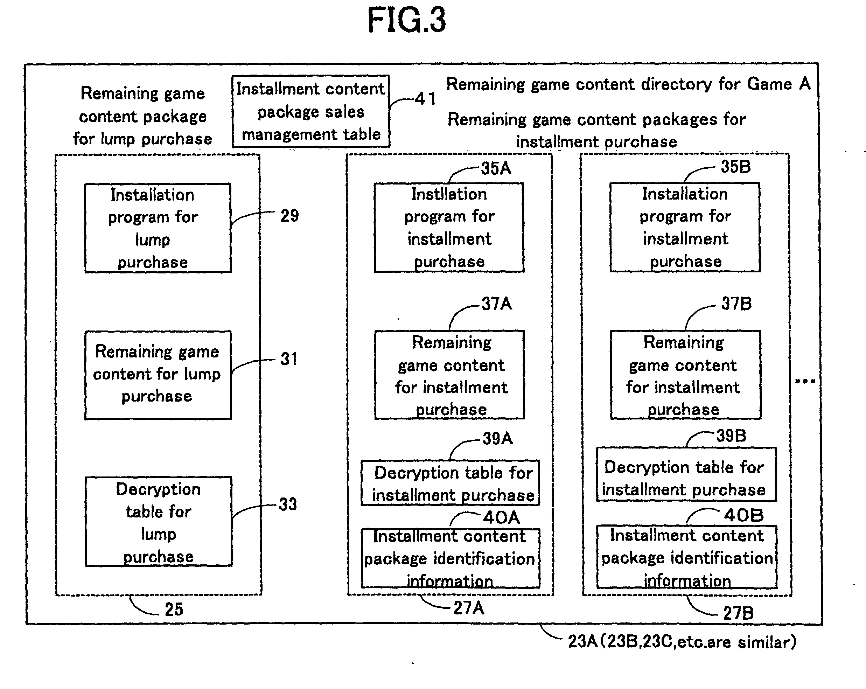

FIG. 3 is a drawing showing the internal constitution of a remaining game content directory 23A. (The characteristic features of such remaining game content directories 23A, 23B, 23C ... all being the same, 23A at FIG. 3 is shown in representative fashion.)

Remaining game content directory 23A corresponds to Game A. At remaining game content directory 23A, remaining game content may be made available in a plurality of modes corresponding to a plurality of game purchase formats (or expressed from a different perspective, game sale formats). In the present embodiment, because the possible game purchase formats include the two game purchase formats "lump purchase" and "installment purchase," a lump purchase remaining game content package (hereinafter "lump content package") 25 and one or more installment purchase remaining game content packages (hereinafter "installment content packages") 27A, 27B, ... have been made available at remaining game content directory 23A.

Such a lump content package 25 comprises all of the remaining game content (hereinafter "lumped remaining content") 31, a lump purchase decryption table 33, and a lump purchase installation program 29. Recorded at such a lump purchase decryption table 33 may be information for decryption of all of the encrypted data (data which has been encrypted) stored on the CD-ROM 7 which pertains to Game A. Such a lump purchase installation program 29 is a program which is downloaded at the beginning of download when a lump content package 25 is downloaded to the user system I and which installs the lumped remaining content 31 and the lump purchase decryption table 33 at the user system 1 while the lump content package 25 is being downloaded.

Note that as used herein "lump purchase" refers to a purchase format which is such that all remaining content is purchased and downloaded. In the event that following lump purchase the downloaded lumped remaining content is for example accidentally erased and the user wishes to again download that same lumped remaining content, such download may be carried out without further charge by the user key.

Such an installment content package 27A comprises an installment of remaining game content (hereinafter "remaining content installment") 37A, an installment purchase decryption table 39A, an installment purchase installation program 35A, and installment content package identification information 40A (characteristic features of any other installment content packages 27B and so forth are likewise similar). Remaining content installment 37A is remaining game content having a constitution corresponding to an installment methodology as described below. Recorded at installment purchase decryption table 39A may be information for decryption of a prescribed set or subset of the encrypted data stored on the CD-ROM 7. Installment purchase installation program 35A is a program which is downloaded at the beginning of download when an installment content package 27A is downloaded to the user system 1 and which installs the remaining content installment 37A, the installment purchase decryption table 39A, and installment content package identification information 40A at the user system 1 while the installment content package 27A is being downloaded. Installment content package identification information 40A is unique information for identifying installment content package 27A.

Note that as used herein "installment purchase" refers to a purchase format which is such that an installment content package comprising a remaining content installment formed by physical or temporal division of remaining content is downloaded.

A "remaining content installment formed by physical division" refers to a portion of the entire remaining game content, the data size of such a remaining content installment being smaller than that of lumped remaining content. For example, if the game corresponding to the remaining game content falls into the category of adventure or simulation or the like, then remaining content installments might be divided by chapter, likewise, remaining content installments for an action- or shoot-'em-up-type game or the like might be divided by scenario; and remaining content installments for a role playing game or the like might be divided by major event (e.g., appearance of a certain character, passage through a particular gateway, etc.).

A "remaining content installment formed by temporal division" refers to remaining game content for which charges are assessed in correspondence to the length of time a game making use of the remaining game content is executed (here, remaining content installment data size is identical to that of the remaining game content). When purchasing a remaining content installment according to this methodology, a desired or prescribed length of time would be specified at the time that a user requests purchase of an installment content package from the game distribution server 3. Responsive to such request, the game distribution server 3 would download allowed game execution time length information indicating the specified length of time to the user system 1 together with the installment content package. The user system 1 would write the downloaded allowed game execution time length information together with the aforementioned game-related information at the game-related information storage component 52. Each time that the downloaded remaining content installment is thereafter executed at the user system 1, the user key 2 would count the execution time length thereof. The game distribution server 3 (or a game execution program included in the remaining content installment) would monitor the game execution time length counted by the user key 2, and at periodic or prescribed time or times (e.g., when the game execution time length so counted approaches the allowed game execution time length indicated by the allowed game execution time length information written to the game-related information storage component 52) ask the user by way of the user system 1 whether or not to extend the allowed game execution time length. Upon receipt of a request to extend the allowed game execution time length from the user in accordance therewith, the allowed game execution time length would be extended by a prescribed or user-desired length of time. Moreover, upon receipt of a request such as would cause allowed execution time length to exceed some fixed time length, because installment purchase would no longer offer the advantage of cheaper purchase relative to lump purchase once such charges reach the fee for lump purchase, the present system may be constituted such that no further charges are assessed thereafter regardless of how much game content is executed.

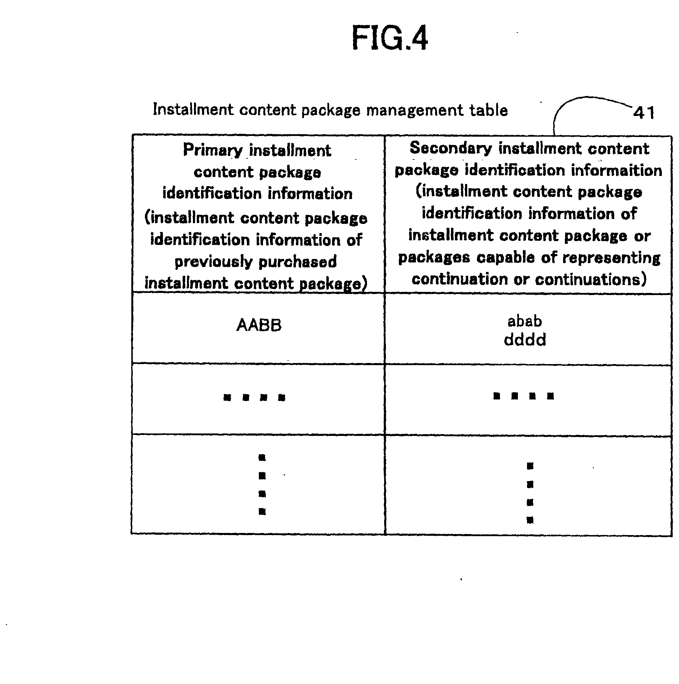

Above, installment purchase has been described. Moreover, as shown in FIG. 3, to permit sale of installment content packages 27A, 27B, ... such that installment content package or packages represents or represent appropriate continuation or continuations of previously purchased installment content package or packages, an installment content package sales management table 41 may be made available at remaining game content directory 23A (and the same is likewise true for 23B and so forth). As shown at FIG. 4, recorded at such an installment content package sales management table 41 in correspondence to respective sets of primary installment content package identification information are one or more sets of secondary installment content package identification information. As shown at FIG. 4, what is here referred to as "primary installment content package identification information" is installment content package identification information for a previously purchased installment content package. Moreover, what is here referred to as "secondary installment content package identification information" is installment content package identification information for installment content package or packages capable of representing continuation or continuations of a previously purchased installment content package. Where there are a plurality of such installment content packages, the user may select desired installment content package or packages at the time of the purchase request, in response to which the game distribution server 3 would download to the user system 1 the installment content package or packages selected by the user. (Note that the present system may also be constituted so as to permit the user to freely select and purchase any desired installment content package or packages.)

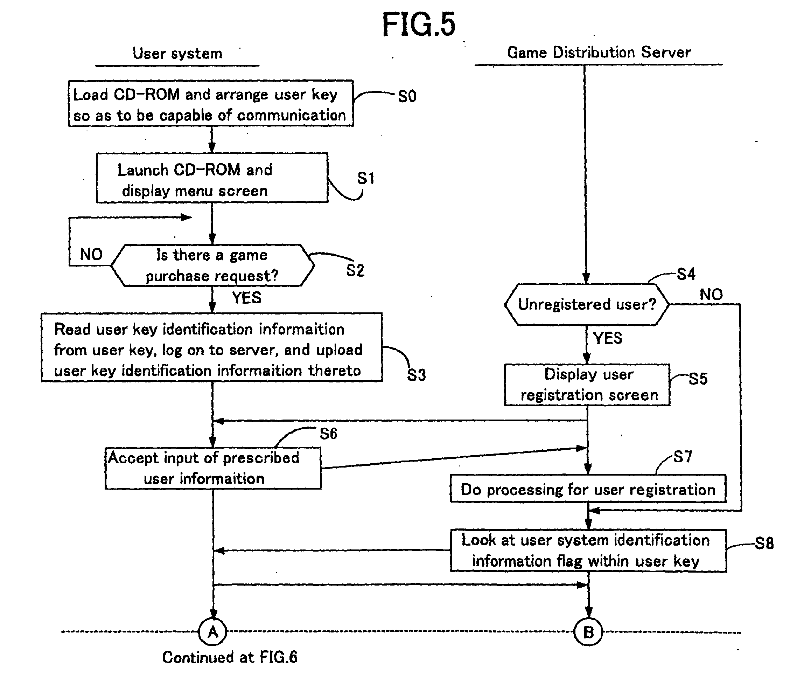

Below, flow of processing when a user purchases desired remaining game content in the foregoing system is described with reference to FIGS. 4 and 5 (at FIGS. 4 and 5, "S" is an abbreviation for "step").

First, as indicated at FIG. 5, a user loads a CD-ROM 7 in a CD-ROM drive (not shown) of the user system 1, this CD-ROM 7 being obtained as a result of distribution thereof at a particular retail shop or other such method, and in addition loads or otherwise arranges a user key 2 so as to permit communication with the user system 1, this user key 2 being obtained by mail as a consequence of user registration or other such method (step 0). Upon so doing, the CD-ROM 7 is launched and a menu screen is displayed at the user system 1 (S1). Here, menu screen display might for example include such menu items as "Set as wallpaper," "Set as screen saver," "View still video," "View motion video," "Preview BGM," "Preview audio," "Preview sound effects," "Browse game literature," "Trial play," "Lump purchase of game," and "Installment purchase of game" for each of the several games Game A, Game B, and Game C.

If, for example, the menu item "Lump purchase of game" or "Installment purchase of game" is selected for Game A from this menu screen (YES at step 2), then the user system 1 (or more accurately, Game A purchase program 15A) reads user key identification information from the user key 2, automatically logs on at the game distribution server 3 using the automatic logon functionality described above, and uploads (sends) to the game distribution server 3 the user key identification information so read (step 3). Here, while not shown in the drawings, the Game A purchase program 15A also uploads game identification information 13A for Game A.

If the user key identification information from the user system 1 logged on thereto is not registered with user information management database 17, i.e., if the user at the user system 1 logged on thereto is an unregistered user (YES at step 4), then the game distribution server 3 causes display of a user registration screen at the user system (step 5). Upon input at such user registration screen of a prescribed set or subset (e.g., name, street address, etc.) of the user information to be registered with the user management information database 17 (step 6), the game distribution server 3 carries out user registration processing such that the user information so input is registered with the user information management database 17 (step 7). (In the event of a NO at step 4, processing proceeds to step 8.)

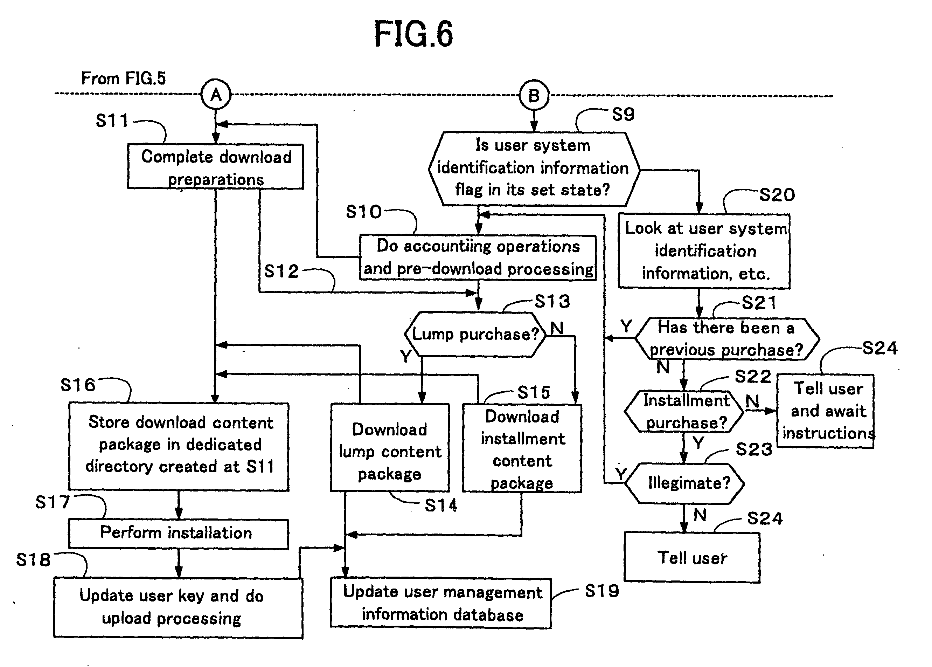

The game distribution server 3 thereafter examines, by way of the user system 1, the user system identification information flag within the user key 2 (step 8), and if, referring now to FIG. 6, that flag is in its unset state, i.e., if for example a "0" is recorded at the flag storage component 53 (N at step 9), then prescribed accounting operations are carried out based on the selling price established for the game content requested to be purchased and the purchase format thereof (such operations may also be carried out at a different server system) and processing preparatory to download of a content package corresponding to the purchase format selected by the user is carried out (step 10). As a result of such preparatory processing, a directory creation program (not shown) for creation of a dedicated directory at the user system 1 for the purpose of storing data and program or programs associated with Game A might for example be downloaded to the user system 1.

Upon launching of such a downloaded directory creation program and creation of such a dedicated directory at such user system 1, i.e., upon completion of operations preparatory to download proper (step 11), the user system 1 would notify the game distribution server 3 of the fact that download preparations have been completed (step 12).

Upon receiving such notification of the fact that download preparations have been completed from the user system 1, the game distribution server 3 would determine whether the purchase format specified at the user system 1 was "lump purchase" or "installment purchase" (step 13). If it is as a result determined that "lump purchase" was specified (YES at S13), then the game distribution server 3 would download thereto the lump content package 25 (S14); but if it is determined that "installment purchase" was specified (NO at S13), then a specific installment content package (e.g., 27A) would be downloaded thereto (S15).

The user system 1 would store the lump content package 25 or the installment content package 27A from the game distribution server 3 in the dedicated directory created at step 11 (step 16). In parallel fashion with respect to the processing performed at step 16, the user system 1 would by means of the downloaded installation program carry out processing for installation of the lump content package 25 or the installment content package 27A (step 17). Moreover, in parallel with such processing, the user system 1 would read from the CD-ROM 7 all or part of the partial game content 9A corresponding to the downloaded content package 25 or 27A and write same to a prescribed location, e.g., the foregoing dedicated directory. As a result thereof, if the downloaded remaining game content is lumped remaining content, then the complete game content can be reconstructed at the user system 1 from the partial game content read from the CD-ROM 7 and such lumped remaining content. Furthermore, if the downloaded remaining game content is a remaining content installment or installments, then executable partial content, this being an executable portion of the complete game content, can be reconstructed from the partial game content read from the CD-ROM 7 and such remaining content installment or installments. (Note that reconstruction as described above need not occur at the time of download, but may for example take place at the time of receipt of a request to execute game content.)

In addition, in parallel fashion with respect to the processing performed at steps 16 and 17, the user system 1 carries out operations for updating the user key as well as upload operations (step 18). That is, a prescribed executable program (e.g., the installation program) is read at the user system 1 and instructions are issued to the OS of the user system 1, as a result of which user system identification information (e.g., OS product ID and hardware ID) is read from the OS, and game identification information 13A for Game A and CD identification information 11 are read from the CD-ROM 7, and the various types of information so read are respectively written to prescribed storage components within the user key 2. Furthermore, that executable program or a different executable program uploads to the game distribution server 3 the various types of information so read. Note that the "various types of information" stored here at the user key 2 include game purchase format information, and, where the purchased remaining content is a remaining content installment or installments, installment content package identification information.

Upon receiving user system identification information and any other such various types of information from the user system 1, the game distribution server 3 stores those various types of information within the user information management database 17 (step 19).

Conversely, in the event of a Y at step 9 during the course of the foregoing processing, the game distribution server 3, by way of the user system 1, would read user system identification information and game-related information from the user key 2 and compare that information with the game identification information 13A uploaded at step 3 and information within the user information management database 17 (step 20).

If as a result of the processing at step 20 it is determined that there is no game identification information 13A for Game A, i.e., a game requested to be purchased, present within the user information management database 17 that can be cross-referenced to the user initiating the purchase request (N at step 21), then processing at the game distribution server 3 proceeds to step 10.

Furthermore, if as a result of the processing at step 20 it is determined that there is game identification information 13A for Game A, i.e., a game requested to be purchased, present within the user information management database 17 that can be cross-referenced to the user initiating the purchase request, that the game purchase format is "lump purchase," and that the user system identification information from the user key 2, the user identification information present at the user system 1, and the user system identification information present within the user management information database 17 are respectively all in complete agreement (Y at step 21, N at step 22, and Y at step 23), then the game distribution server 3 causes display of a message at the user system 1 to the effect that the game has already been purchased and inquires as to whether or not repeat purchase thereof is desired (step 24). While not indicated specifically in the drawings, if the user specifies a desire to make repeat purchase, then the game distribution server 3 might, at no charge, download to the user system 1 the same remaining game content as was previously purchased. This permits the user to be reassured that even should game content which is stored at the user system following purchase be accidentally deleted the user can obtain the same game content again at no charge.

Furthermore, if as a result of the processing at step 20 it is determined that there is game identification information 13A for Game A, i.e., a game requested to be purchased, present within the user information management database 17 that can be cross-referenced to the user initiating the purchase request, that the game purchase format is "installment purchase," and that the user system identification information from the user key 2, the current user system identification information present at the user system 1, and the user system identification information present within the user management information database 17 are respectively all in complete agreement (Y at step 21, Y at step 22, and Y at step 23), then processing at the game distribution server 3 proceeds to step 10.

Furthermore, if as a result of the processing at step 20 it is determined that there is game identification information 13A for Game A, i.e., a game requested to be purchased, present within the user information management database 17 that can be cross-referenced to the user initiating the purchase request but the user system identification information from the user key 2, the current user system identification information present at the user system 1, and the user system identification information present within the user management information database 17 are not in agreement (YES at step 21, NO at step 22, and NO at step 23), then the game distribution server 3 causes display of a message at the user system 1 to the effect that the user system identification information does not match and is thus illegitimate (step 25).

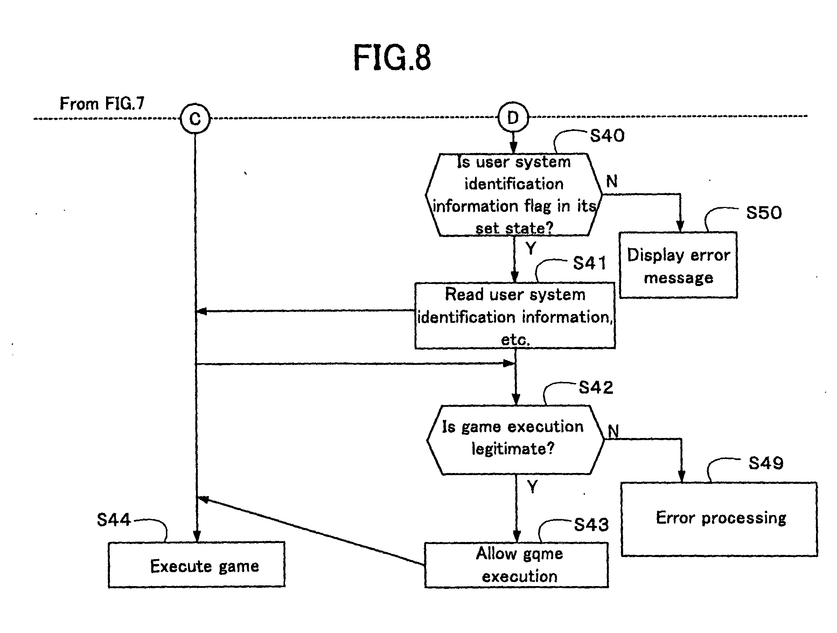

Above, flow of processing when remaining game content is subject to "lump purchase" or "installment purchase" has been described. Next, flow of processing when purchased game content is actually executed is described with reference to FIGS. 8 and 9.

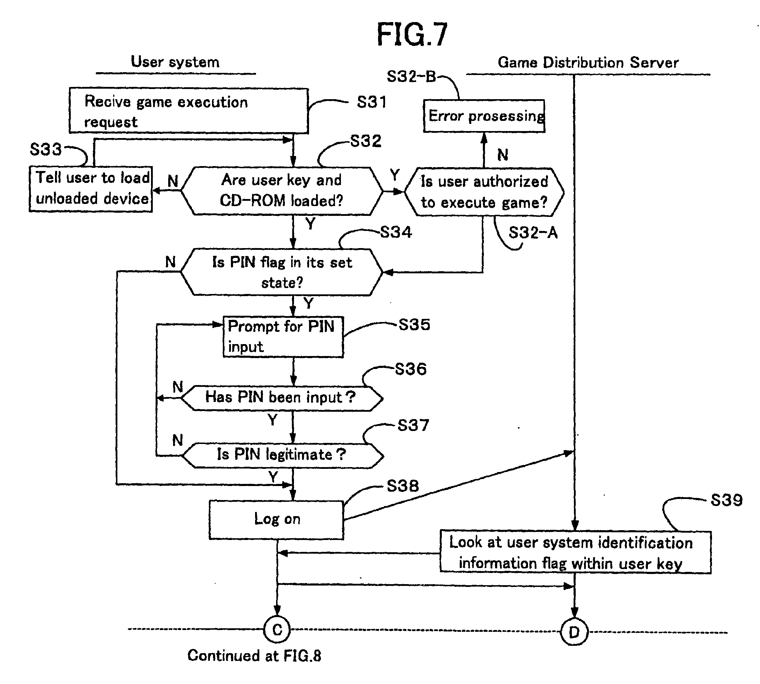

As indicated at FIG. 7, to cause execution of purchased remaining game content (or game content reconstructed at the time of installation of remaining game content), the user double-clicks on an icon for that game content or performs some other such operation to request execution of such game content at the user system 1 (step 31). At such a time, the user system determines whether or not the user key 2 and the CD-ROM 7 are loaded (step 32).

If it as a result determined that either or both the user key 2 and/or the CD-ROM 7 is or are not loaded (N at step 32), then the user system 1 instructs the user to load the item or items which it determines is or are not loaded (i.e., the user key 2 and/or the CD-ROM 7) (step 33).

Conversely, if it is determined at step 32 that both the user key 2 and the CD-ROM 7 are loaded (Y at step 32), then the user system 1 determines whether or not the user initiating the game execution request is authorized to execute the game content requested to be executed (step 32-A). More specifically, the user system 1 compares the user system identification information present within the user key 2 and the user system identification information currently present at the user system 1, and if it is as a result determined that these sets of information are in mutual agreement (Y at step 32-A), then game execution is determined to be authorized and processing proceeds to step 34. Conversely, if it is determined at step 32-A that these sets of information do not match (N at step 32-A), then game execution is determined to be unauthorized at the user system 1 and prescribed error processing is carried out (e.g., display of message to effect that game execution cannot be carried out because the game execution request is from a user without legitimate authorization) (step 32-B). (Note that checking of authorization at step 32-A may be such that in addition to the foregoing comparison, CD identification information included in the game-related information present within the user key 2 and CD identification information on the currently loaded CD-ROM 7 are moreover compared, with game execution being determined to be "unauthorized" if these sets of information do not match, or "authorized" if they do match.)

In the event of a Y at step 32-A, the user system 1 thereafter examines the PIN flag within the user key 2 to determine whether it is in its set state, i.e., to determine for example whether a "1" is recorded at the PIN flag storage component 57 (step 34), and if it is (Y at step 34) then the user system 1 prompts the user for PIN input (step 35). Following PIN input (Y at step 36), the user system 1 compares the PIN which was input and the PIN within the PIN storage component 56 (step 37), and if the two agree, i.e., if a legitimate PIN was input (Y at step 37), then the user system 1 logs on to the game distribution server 3 (step 38).

Upon being logged onto by the user system 1, the game distribution server 3, by way of the user system 1, examines the user system identification information flag within the user key 2 (step 39). If it is determined that this flag is in its set state (Y at step 40), then the game distribution server 3 reads user key identification information, user system identification information (e.g., OS product ID and hardware ID game identification information, etc.) from the user key 2 (step 41). Furthermore, the game distribution server 3 determines whether or not any one user information directory present within the user management information database 17 contains each the user key identification information, the user system identification information, and the game-related information which were so read (step 42). (Because user system identification information is written to the user key 2 at the time a game is purchased, a situation where the user system identification information flag is determined at step 40 to be in its unset state despite the presence of remaining game content at the user system 1 should be impossible in the present embodiment, so if the user system identification information flag is here determined to be in its unset state then some particular processing such as display of an error message or the like is carried out (step 50).)

If it is determined at step 42 that a user information directory meeting the conditions described above is in fact present (Y at step 42), then the game distribution server 3 grants permission for the user system 1 to execute the game requested by the user (step 43); but if not present (N at step 42), then error processing, e.g., display at the user system 1 of a message to the effect that the user system identification information within the user key 2 is illegitimate, is carried out (step 49).

Upon being granted permission for game execution from the game distribution server 3, game content is executed at the user system 1 responsive to a request therefor from the user (step 44). The game content which is executed here may be remaining game content alone or may be game content which is reconstructed from remaining content installed at the user system 1 and partial game content read from the CD-ROM 7. Control of execution of game content may be carried out at the user system 1, and/or may be carried out as a result of action of the game distribution server 3 on the user system 1 by way of the Internet 5. Furthermore, where particular game execution control information has been written to the user key 2, control of game execution may be carried out based on such game execution control information present within the user key 2.

The embodiment described above permits a game stored on a CD-ROM 7 to be only partial, with remaining game content being downloaded from a game distribution server 3. This makes it possible to substantially eliminate the risk of inability to recover the cost of manufacturing such CD-ROM 7 and to eliminate the possibility that the entire game will be played without legitimate purchase of game content.

Furthermore, the embodiment described above permits installment purchase of remaining game content. This is convenient to the user because it allows even game content which is large in size to be downloaded such that a comparatively short time is taken for each download. Furthermore, because purchase of any desired portion of game content (or content installment or installments representing continuation or continuations of previously purchased content installment or installments) is permitted, users finding it difficult to get to the end of a game through lack of aptitude or inability to set aside great amounts of time for games can without difficulty play the final portion of a game, and need not expend great expense in the event that they decide to discontinue play of a game for some reason or the other. In short, the present embodiment represents added convenience for the user in many respects and in many situations.

Furthermore, the embodiment described above permits various data stored in advance on a CD-ROM 7 to respectively be encrypted such that decryption table or tables within content package or packages 25 and/or 27A, 27B, ... downloadable as a result of legitimate purchase of game content is or are necessary to read such various data therefrom. This permits prevention of fraudulent access to the various data stored on such CD-ROM 7.

Furthermore, where remaining game content requested to be purchased represents a first such purchase request, the embodiment described above permits user system identification information present at a user system 1 at that time to be stored at a user information management database 17 and user key 2 so as to permit cross-referencing to game-related information associated with remaining game content subject to purchase. In order for such game content to be executed at a time thereafter, a user key 2 having the user system identification information which was stored at the time of purchase of such game content must be loaded at a user system 1 which is provided with such user system identification information. The reason for this is to permit determination of legitimacy of user system identification information within such user key 2 in correspondence to game content desired to be executed, and to permit granting of permission to execute game content only when same has been determined to be legitimate. Expressing this another way, this is so that, in the present embodiment, execution of game content cannot take place except at the user system 1 used at the time of purchase. This makes it possible to prevent execution at another machine of the game content at the user system 1, since even if such game content at such user system 1 could be copied to another machine the user identification information at that other machine would be different from the user identification information at the user system 1 which was used at the time of purchase (i.e., the user identification information stored within the user key 2). This therefore makes it possible to substantially prevent proliferation of pirated copies thereof.

Whereas a preferred embodiment of the present invention has been described above, this example has been presented for purposes of description and it is not intended that the scope of the present invention should be limited to this embodiment alone. The present invention may be carried out in the context of a wide variety of other embodiments.

For example, in a first alternative embodiment, the storage capacity of the user key 2 may be increased and the game content itself stored at the user key 2. This permits prevention of loss of storage capacity at the user system despite purchase of game content; or expressing this differently, essentially permits the storage capacity of the user system to be increased.

As a second alternative embodiment, a CD distribution source identification ID for identifying a distribution source directly distributing a CD-ROM 7 to a user (e.g., where the CD-ROM 7 is distributed together with a magazine, an identification ID of the sales source that sold the magazine; where the CD-ROM 7 is distributed at no charge by a convenience store, an identification ID of the convenience store) may be stored on the CD-ROM 7, and such CD distribution source identification ID may be sent to the game distribution server 3 at the time of the above-described purchase of game content. In such a case, the game distribution server 3 would tabulate the number of CD distribution source identification IDs received from user systems. Based on the results of such tabulation, a game content production source or sales source could learn the extent to which CD-ROMs 7 distributed by which sources contributed to proceeds from (sales of) game content, and could provide the various CD-ROM distribution sources with a reward or rewards based on the respective percent contributions to sales.

Moreover, this could be implemented at the user key 2. That is, storage of user key distribution source identification information at a user key 2 would permit achievement of the same sort of thing as described above.

As a third alternative embodiment, partial game content on a CD-ROM 7 may be stored in an encrypted and incomplete form such that data and/or program or programs making up such partial game content is or are compressed, with real code being removed from such compressed content in accordance with a prescribed rule or rules (such real code may be recorded in a decryption/decompression data table, described below) and with dummy code being embedded instead at the location or locations of such removal (such embedding may alternatively be omitted). In such a case, information permitting normal execution of such incomplete partial game content (in more specific terms, a data table containing the real code which was removed as well as information for inserting same and for decrypting and decompressing the compressed content obtained as a result of insertion thereof; hereinafter "decryption/decompression data table") and an executable decryption/decompression program linked thereto would be downloaded to the user system 1 at the time that remaining game content is downloaded.

In a specific example, partial game content is compressed and a prescribed amount of code (e.g., 1 byte worth of data) is removed from the compressed partial game content at locations every 256 kilobytes therethroughout, with dummy code being inserted therein instead, to produce incomplete partial game content which is then stored on the CD-ROM 7.

Such incomplete partial game content may be made into complete partial game content as follows. That is, a decryption/decompression data table and an executable decryption/decompression program linked thereto would have already been downloaded and installed at a time when remaining game content is legitimately downloaded and installed. Such decryption/decompression program reads incomplete partial game content from the CD-ROM 7, uses data contained in the decryption/decompression data table linked thereto to remove the dummy code from the incomplete partial game content so read, embedding instead at such location or locations real code contained in the decryption/decompression data table and decrypting same, to generate complete partial game content at the user system 1 from the incomplete partial game content so read. This permits prevention of execution where there is access to the partial game content alone, since even if the partial game content stored on the CD-ROM 7 could be fraudulently read therefrom, the data and/or program or programs making up same would still be in an incomplete state. Such fact is particularly effective with respect to the following.

That is, among users purchasing game content there are users who purchase same not with the object of playing the game itself but rather for enjoyment of the still video or motion video associated therewith, or with the object of listening to the BGM, audio, or the like. Because such a user might be happy just to be able to access the data associated with a game even if such user was unable to play such game, there is a possibility that such a user might attempt to read the data on the CD-ROM 7 by fraudulent means.

Therefore, because the third alternative embodiment allows game subcontent on a CD-ROM 7 to be stored as incomplete partial game content, meaning that even if such content were to be fraudulently read therefrom by fraudulent means execution thereof would be impossible using that alone, prevention of the foregoing sorts of fraudulent attempts is permitted. Furthermore, because this permits the producer of such a game to be reassured that all of the data associated with such game content can safely be recorded on such CD-ROM 7, meaning that all that would then need to be downloaded would be the decryption/decompression data table and program or programs for execution of game content, these representing little in terms of data size, the length of communication time required for download at the time of legitimate purchase of remaining game content can be decreased.

Moreover, this third alternative embodiment may be such that a game data loader is provided to a user, such game data loader being hardware or software which is provided with data and/or program or programs for permitting execution of incomplete partial game content as complete partial game content. Such a game data loader would have a decryption/decompression data table as described above, permitting the aforementioned incomplete partial data content to be made into complete partial content, or expressing this from the perspective of the user, making it possible to enjoy still video and/or motion video and/or listen to audio and/or music and so forth. Because this would allow data normally made available in correspondence to the degree to which progress is made in playing a game to be made available even if the game were not played, even users without aptitude for games or users such as described above for whom playing the game is not the foremost object would be able to enjoy game content.

As a fourth alternative embodiment, all of the data and/or program or programs associated with game content may be managed by the game distribution server 3. In such a case, the game distribution server 3, might initially download partial game content to a user at no charge or at low price in response to a request from the user, and might thereafter download remaining game content to the user in supplementary fashion in the event of a purchase request from such user.

As a fifth alternative embodiment, processing might be executed to provide some benefit to a user who registers as described above and purchases game content.

As a first example of such processing for providing a benefit, user information associated with such a user making a purchase of game content might be read, and paraphernalia associated with such purchased game content (e.g., a pamphlet containing information related to such game content (literature used for production of the game or the like), a figurine in the likeness of a character appearing in such game content, etc.) might be sent to a street address contained in such user information.

As a second such example, a URL of a web page containing completely new data (still video, motion video, audio, music, or other such data) not recorded on the CD-ROM 7 might be sent to such user system.

As a third such example, processing to determine whether a user has won or lost a prize drawing (e.g., processing to determine whether or not the last 3 digits of user system identification information read from a user key 2 are "777") might be carried at the time of game purchase, with a discount on game content or other such prize being awarded to the corresponding user who wins such a drawing.

As a fourth such example, data indicating how much time it took for a user to successfully complete play of downloaded game content ("time length data"), or data indicative of skill of a user at playing a game (e.g., data indicating total points scored; hereinafter "technical data"), might be made capable of being sent to a game distribution server 3, with such game distribution server 3 extracting therefrom, separately for each such example of game content, the user who successfully completed play thereof in the shortest amount of time, or the user who demonstrated the most skill therein, and awarding some prize to such user (e.g., prize item or prize money or some benefit instead thereof (e.g., discount on any game content of the user's choice)), or sorting by rank the aforementioned time length data or the aforementioned technical data which was sent thereto and listing results of such ranking at a prescribed web page so as to indicate to users their rank among all users who played the game content in question.

As a fifth such example, a game distribution server 3 might credit users with a prescribed number of points, tracked separately for each user, each time that game content is purchased, and might award some benefit to users, e.g., discount on any game content of the user's choice, in correspondence to the total number of such points.

As a sixth such alternative embodiment, a game distribution server 3 might download the same remaining game content to a plurality of machines including a user system 1 used during purchase of such remaining game content. A primary reason for doing so is because there are users who own one or more user systems in addition to a user system 1 used at the time of purchase of remaining game content.

A specific example of such sixth such alternative embodiment is described below

At a prescribed time, a game distribution server 3 accepts registration of user system identification information (OS product ID and hardware ID (MAC address, etc.)). As used here, "at a prescribed time" may refer for example to any of (1) during purchase and/or download of remaining game content, (2) a time when installation of such remaining game content is completely finished, and/or (3) upon being accessed at any time of the user's choosing, subject to entry of a password unique to such user (e.g., PIN recorded at user key 2 used at time of purchase of remaining game content) (such constitution may be such that registration of user system identification information is not accepted at times other than (1) through (3)). Furthermore, as methods for "accepting registration of user system identification information," (A) a method wherein a user accomplishes such registration through direct input, as a result of keyboard entry from a user system possessing legitimate authorization at such time (e.g., user system 1 used at time of purchase of remaining game content), of user system identification information for machine or machines owned by such user which such user has previously written down for convenience of remembering, and (B) a method wherein the user logs on thereto from a different machine which is granted logon permission as a result of input of the aforementioned unique password, with a request for registration of user system identification information of that different machine being accepted therefrom and with such user system identification information of that different machine being automatically confirmed and registered at the time of acceptance of such registration request, are for example conceivable. Such methods make it possible for the number of user systems having legitimate authorization (authorization for repeat download of remaining game content legitimately purchased once and authorization to execute reconstructed game content, described above, comprising such remaining game content) to be increased in correspondence to the number of machines in use by a user making legitimate purchase (such plurality of sets of user system identification information registered in this way at such server 3 may for example be cross-referenced to game-related information for such purchased remaining game content or may be independently registered at user key or keys 2). Moreover, method (B) permits accommodation of situations where legitimate user system identification information is changed to new user system identification information as a result of replacement of user system 1 with a newly purchased user system, or a change in the OS installed at user system 1 due to OS upgrade, or the like (at such a time, old user system identification information recorded at user key 2 and/or user information management database 17 may respectively be replaced by new user system identification information under the control of such server 3).

The following sorts of features are also possible with the aforementioned sixth alternative embodiment.

That is, it might be possible to assume that upon purchase of a computer system capable of becoming a user system and establishment of an OS thereat that the user system identification information thereof would necessarily be registered with a manufacturing source system of at least either the computer system manufacturer or the OS manufacturer as a result of user registration. In such a case, such game distribution server 3 might periodically or at a prescribed time or times access such manufacturing source system, identify and read any user system identification information registered with such manufacturing source system corresponding to user system identification information belonging to a user registered with such game distribution server 3, and register same at the user information management database 17. Such game distribution server 3 would carry out such processing separately for different users. Such game distribution server 3 would thereafter, except for the user system used at the time of purchase of remaining game content, refuse to allow download or execution of purchased remaining game content by other than a computer system having user system identification information registered in such fashion.

Furthermore, such sixth alternative embodiment may be such that such server 3 restricts the number of times that game content can be executed by a different machine other than the user system 1 used at the time of purchase of remaining game content when the user system identification information at such different machine is not registered with a manufacturing source of at least either such different machine or an OS installed therein. (In such a case, the server 3 would prior to completion of execution for such number of times instruct such user to carry out registration of user system identification information at such different machine or machines with the aforementioned manufacturing source or sources. In the event that such registration did not take place prior to completion of execution for the aforementioned restricted number of times, the server 3 would refuse execution of game content beyond the aforementioned restricted number of times.)

As a seventh such alternative embodiment, remaining game content installed at a user system 1 may be deleted from such user system 1 at a prescribed time or times (e.g., at the end of a game or during shutdown of user system 1). Such deleted remaining game content might at a specific time or times (e.g., when the user system 1 is started up with the user key 2 loaded therein or when a purchase request is received from the user while the user key 2 and the user system 1 are capable of communication) be automatically downloaded from such game distribution server 3 and installed.

As an eighth alternative embodiment, a purchase format similar to "installment purchase" might be adopted which permits selective purchase of object content capable of being used together with some arbitrary game content. As examples of such object content, if the arbitrary game content falls into the category of role playing, then such object content might be data representing a weapon, protective gear, or other such item or items capable of being used in that game; or if the arbitrary game content falls into the category of simulations, then such object content might be data representing armaments or personnel capable of being used in that game. Moreover, such game distribution server 3 might distribute such object content to user or users meeting prescribed conditions when such conditions are met (e.g., when a prescribed number of points have accumulated at the game distribution server 3 as a result of purchase of remaining game content or the like, or when remaining game content is purchased at a prescribed data and/or time, or a prescribed code sequence is contained within user system identification information, and so forth).

## Claims

1. A method of selling digital content, the method having
an initial providing step wherein an initial content, the initial content being a portion of a complete digital content, is provided to a user system;
a purchase request receiving step wherein a server system receives a content purchase request from the user system by way of a communications network; and
a supplementary providing step wherein responsive to the content purchase request the server system provides to the user system by way of the communications network a remaining content, the remaining content being what remains after removal of the initial content from the complete digital content, so as to permit the complete digital content to be reconstructed at the user system from the partial content and the remaining content.

2. A method of selling content according to claim 1 furthermore having
a purchase format selection step wherein the server system receives from the user, at the time that the content purchase request is received from the user, a selection of either lump purchase or installment purchase;
the supplementary providing step which is carried out by the server system being such that if a selection of lump purchase is received then all of the remaining content is provided to the user system, but if a selection of installment purchase is received then one of a plurality of content installments formed by physical or logical division of the remaining content is provided to the user system so as to permit an executable partial content, the executable partial content being an executable physical or logical portion of the complete digital content, to be reconstructed at the user system from the initial content and the content installment.

3. A method of selling digital content according to claim 1 or claim 2 such that in the event of an instruction for a target content to be executed at the user system, the target content being at least one of a reconstructed content, the executable partial content, the remaining content, or the content installment, the reconstructed content being complete digital content reconstructed from the remaining content and the partial content, the method furthermore has
a step wherein legitimacy of execution of the target content is checked; and
a step wherein execution of the target content is controlled in correspondence to the results of the legitimacy check.

4. A method of selling digital content according to claim 1 or claim 2 furthermore having
a step wherein execution system identification information assigned to a specific computer system authorized to execute the target content is stored; and,
in the event of an instruction for the target content to be executed at the user system, furthermore having a step wherein the stored execution system identification information is compared with user system identification information assigned to the user system; and
a step wherein execution of the target content at the user system is controlled in correspondence to the results of the comparison.

5. A method of selling digital content according to claim 1 or claim 2 furthermore having
a user key providing step wherein a user key is provided to a user, the user key being an external storage device having means for communicating with the user system; and
a step wherein the user key stores execution system identification information assigned to a specific computer system authorized to execute the target content; and,
in the event of an instruction for the target content to be executed at the user system, furthermore having a step wherein the user key communicates with the user system and the execution system identification information within the user key is compared with user system identification information assigned to the user system; and
a step wherein execution of the target content at the user system is controlled in correspondence to the results of the comparison.

6. A method of selling content according to claim 1 furthermore having
a step wherein execution system identification information assigned to a specific computer system authorized to execute the target content is received from the computer system and stored by the server system; and,
in the event of an instruction for the target content to be executed at the user system, furthermore having a step wherein the server system receives from the user system, by way of the communications network, user system identification information assigned to the user system;
a step wherein the server system compares the stored execution system identification information and the user system identification information from the user system; and
a step wherein execution of the target content at the user system is controlled by way of the communications network in correspondence to the results of the comparison.

7. A method of selling content according to claim 1 wherein the initial content comprises at least one image, audio, or text information digital subcontent;
all or part of the at least one digital subcontent having removed therefrom prescribed code necessary for normal output thereof so as to prevent normal output of all or part of the at least one image, audio, or text information from taking place at the user system based on the initial content alone;
the prescribed code removed therefrom being included instead in the remaining content.

8. A method of selling digital content according to claim 1 furthermore having
a recording medium providing step wherein an initial content storage medium is provided to the user, the initial content storage medium being capable of being used at the user system and having stored thereon the initial content; and
a user key providing step wherein a user key is provided to a user;
the user key being an external storage device having means for communicating with the user system, the initial content recording medium also having stored thereon recording
medium identification information, the recording medium identification information being unique to the initial content recording medium; and furthermore having
a step wherein the user key stores
(1) the recording medium identification information stored on the initial content recording medium and
(2) execution system identification information assigned to a specific computer system authorized to execute a target content, the target content being at least one of a reconstructed content, the executable partial content, the remaining content, or the content installment, the reconstructed content being complete digital content reconstructed from the remaining content and the partial content; and,
in the event that the content purchase request does in fact occur, furthermore having a step wherein a check is performed to determine whether recording medium identification information stored on the initial content recording medium which is used at the user system is present within the user key;
the supplementary providing step being such that the remaining content which is the subject of the content purchase request is provided to the user system when as a result of the check it is determined that the recording medium identification information present within the user key is identical to recording medium identification information stored on the initial content recording medium which is used at the user system and that the execution system identification information within the user key is furthermore identical to user system identification information assigned to the user system.

9. A method of selling digital content according to claim 1 furthermore having
a recording medium providing step wherein an initial content storage medium is provided to the user;
the initial content storage medium being capable of being used at the user system and having stored thereon the initial content, and the initial content storage medium being capable of being used for receiving provision of the remaining content and having stored thereon recording medium provision source identification information, the recording medium provision source identification information being unique to a source which provided the initial content storage medium; and furthermore having
a step wherein the server system tabulates the recording medium provision source identification information on the initial content recording medium used at the user system when receiving provision of the remaining content which is the subject of the content purchase request.

10. A method of selling digital content according to claim 1 furthermore having
a user key providing step wherein a user key is provided to a user;
the user key being an external storage device having means for communicating with the user system, and the user key being capable of being used for receiving provision of the remaining content and having stored thereon user key provision source identification information, the user key provision source identification information being unique to a source which provided the user key; and furthermore having
a step wherein the server system tabulates the user key provision source identification information within the user key used at the user system when receiving provision of the remaining content which is the subject of the content purchase request.

11. A method of controlling execution of digital content, the method being such that in the event of an instruction for a user system to execute digital content there is
a step wherein legitimacy of execution of the digital content is checked; and
a step wherein execution of the digital content is controlled in correspondence to the results of the legitimacy check.

12. A system for selling digital content, the system being provided with
purchase request receiving means for receiving a content purchase request by way of a communications network from a user system to which an initial content is provided, the initial content being a portion of a complete digital content; and
providing means for providing, responsive to the content purchase request, a remaining content to the user system by way of the communications network, the remaining content being what remains after removal of the initial content from the complete digital content, so as to permit the complete digital content to be reconstructed at the user system from the partial content and the remaining content.

13. A system for controlling execution of digital content, the system, in the event of an instruction for a user system to execute digital content, being provided with
means for checking legitimacy of execution of the digital content; and
means for controlling execution of the digital content in correspondence to the results of the legitimacy check.

14. A storage device which is provided to a user and which is capable of communicating with a computer system, the storage device being provided with
means for, after provision thereof to a user, storing execution system identification information assigned to a specific computer system authorized to execute digital content; and
means for, in the event of an instruction for the user system to execute the digital content, communicating with the user system;
so as to permit the execution system identification information within the user key to be compared with user system identification information assigned to the user system, and so as to permit execution of the digital content at the user system to be controlled in correspondence to the results of the comparison.
